# EUROPEAN PATENT SPECIFICATION

(11) **EP 2 510 828 B1**
(45) Date of publication and mention of the grant of the patent: **22.04.2020**
(21) Application number: 10836244.3
(22) Date of filing: 10.12.2010
(51) Int. Cl.: A45D 34/00, B65D 47/34, B05B 11/00

(54) **COSMETICS CONTAINER**
KOSMETIKBEHÄLTER
RÉCIPIENT POUR COSMÉTIQUES

(30) Priority: 11.12.2009 KR 20090016173 U
(43) Date of publication of application: 17.10.2012
(73) Proprietor: Amorepacific Corporation, Seoul 140-777 (KR)
(72) Inventor: JEONG, Hae Won, Anyang-si Gyeonggi-do 430-710 (KR); YOO, Chang Gyu, Yongin-si Gyeonggi-do 446-908 (KR); KIM, Jin Kyoung, Seoul 140-013 (KR); CHANG, Ye jong, Seoul 143-771 (KR); KIM, Yee Hwa, Seongnam-si Gyeonggi-do 463-863 (KR); CHAI, Rita, Seoul 137-049 (KR)
(74) Representative: Dossmann, Gérard
(86) International application number: PCT/KR2010/008873
(87) International publication number: WO 2011/071349

(56) References cited:
- JP-A- 2002 362 605
- JP-A- 2002 362 659
- JP-A- 2005 305 370
- JP-A- 2006 256 652
- JP-A- 2007 217 038
- JP-A- 2009 286 456
- KR-U- 20090 010 380
- KR-Y1- 200 415 350
- KR-Y1- 200 415 350
- US-A- 1 177 423

## Description

### TECHNICAL FIELD

The invention relates to a cosmetic container including a piston in which content contained in the container always reaches a content inlet of an airless discharge pump as the piston rises upward along and on an inner wall of the container with operation of the airless discharge pump. More specifically, the invention relates to such a cosmetic container in which content amount remaining in the container is indicated in association with the rising movement of the piston. and more particularly the invention relates to a cosmetics container according to the preamble of claim 1, such as it is for example known from KR 200 415 350 Y1.

### RELATED ART

Generally, an airless discharge pump has been employed for discharging, with appropriate amount, liquid or gel state contents contained in a container.

Such an airless discharge pump may discharge the contents with small and accurate amount and hence has been employed in a functional cosmetic container whose functional content may be typically expensive.

The cosmetic container further includes a piston by which the content contained in the container may always reach a content inlet of the airless discharge pump.

That is, as the piston mounted in the container rises upward along and on an inner wall of the container, a topmost level of the content contained in the container approach the content inlet of the airless discharge pump.

However, generally, a product name, a manufacturer and so on of the cosmetic is indicated on an outer face of the cosmetic container or the cosmetic container itself is made of opaque material so that the content contained in the container may not be affected by direct rays of sun. Therefore, it is difficult for a user to check out the amount of the content remaining in the container.

JP2007217038 (A) discloses a bottom-raised light-shielding container with a pump, whose sliding bottom plate can be easily viewed when it rises close to the upper limit. Therein a lower end surface of an opaque container body is closed with a fixed bottom plate with a window. A gauge holder which accommodates a rolled tape so that it can be pulled out is fixed onto the bottom plate. A leading edge of a tape pulled out from the rolled tape in the holder and passed through a passage provided above the window has an identifier indicated on the part of the tape above the window when the sliding bottom plate rises close to the upper limit.

JP2002362605 (A) discloses a residual amount of liquid in an opaque container to be confirmed by sight from outside the container. There is provided a liquid injection container in which a lower end of a cylinder is positioned within an upper segment of an opaque container, a head depressing type liquid injection pump is installed at an upper segment of the container, a sliding bottom plate is fitted to an inner surface of the container, and liquid in the container can be injected out of a nozzle installed at a head, under an operation of the head. An inner end segment of a wound resilient band is connected to the sliding bottom plate, an outer circumference segment of the resilient band is arranged along an inner surface of bottom segment of the container in such a way that it can be deformed upwardly at a rate corresponding to an amount of lift of the sliding bottom plate. A bottom surface of the container is made transparent and the bottom surface part having the resilient band spaced apart due to its upward deformation is arranged to enable a residual amount of liquid to be confirmed by sight.

JP2002362659 (A) discloses a liquid jetting container wherein a pump is fitted on the upper end of the container body, and at the same time, which is equipped with a sliding bottom plate at the lower section in the container body, and is constituted in such a manner that the sliding bottom plate may be raised accompanying the reduction of the liquid in the container body by the operation of the pump, and wherein the remaining amount of the housed liquid can be known, and the structure is simple as well. A display plate which is visibly and slidably extended is provided between the container body and an external cylinder which is fitted on the external surface of the container body. In this case, one end of the display plate is connected with the sliding bottom plate. Then, this liquid jetting container is constituted in such a manner that a section, which is located on the outside of the container body, of the display plate may descend accompanying the ascent of the sliding bottom plate, and the remaining amount of the housed liquid may be known.

JP2009286456 (A) discloses a new liquid spraying container having displaying means different from a conventional one, and equipped with a movable dish giving a display surely allowing visual check of the remaining amount or the like. The liquid spraying container includes a container body having an opening part and in which the lower end of a barrel part is closed with a bottom member, a pump, a nozzle head, and the movable dish slidably arranged on the inner peripheral face of the barrel part and elevated as the content is taken out. A transparent window through which the inside of the container body can be seen, is provided on the lower end side of the barrel part, and a displaying is attached to this transparent window, and a hanging member integrally connected to the movable dish through a connection member is arranged. A decorative part on a sidewall of the hanging member serves as undercoat for concealing the displaying in the transparent window, when the hanging member is seated on the bottom member, and when the hanging member is lowered with the movable dish and the decorative part of the sidewall as the undercoat is removed, the display can be visually recognized.

### SUMMARY OF THE INVENTION

### PROBLEM TO BE SOLVED

Accordingly, the invention is conceptualized with the consideration of the above situation and thus an object thereof is to provide a cosmetic container in which content amount remaining in the container or content exhaustion level is indicated in association with rising movement of the piston.

### SOLUTION FOR THE PROBLEM

The above mentioned problem is solved by a cosmetics container according to claim 1.

### EFFECT OF THE INVENTION

In accordance with the invention, it is easy for a user to easily check out the content amount remaining in the container.

### BRIEF DESCRIPTION OF THE ACCOMPANYING DRAWINGS

Embodiments of the present invention are illustrated by way of example, and not by way of limitation, in the drawings and in which like reference numerals refer to similar elements.
Fig.1 is a disassembled configuration view of a cosmetic container according to the invention;
Fig.2 illustrates a connection relationship between an indicator and a piston, and a structure of the indicator as shown in Fig.1;
Fig.3 is a view of an initial state at which the container is completely filled with the content and thus a piston is positioned as close to a bottom of the container as possible; and
Fig.4 is a view of a content exhaustion state at which the content in the container becomes substantially exhausted and thus the piston is positioned as close to a content inlet of an airless discharge pump as possible.

### DETAILED DESCRIPTION

Below, a preferred exemplary embodiment of the invention will be described in details with reference to the accompanying drawings. It should be understood that the invention is not limited to the exemplary embodiment but rather many variations may be possible to the skilled person to the art.

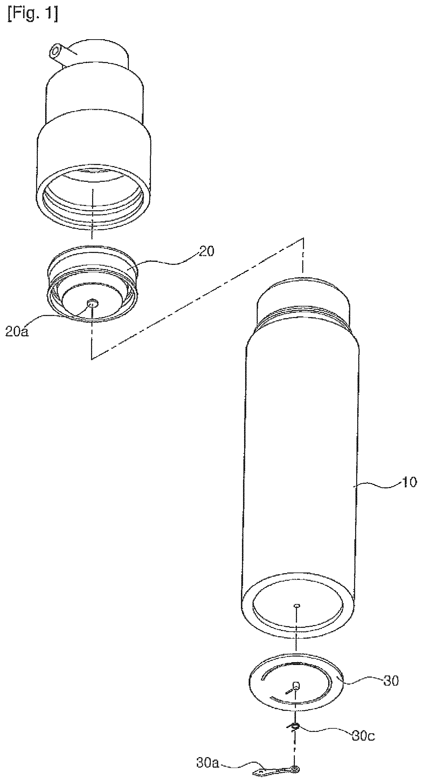

Fig.1 is a disassembled configuration view of a cosmetic container according to the invention.

Referring to Fig.1, the cosmetic container in accordance with the invention includes a container body 10, a piston 20 mounted into the body 10 and an indicator 30 indicating exhaustion level of the content contained in the container body in association with rising operation of the piston 20.

An airless discharge pump (not shown) including a press button and an content injecting hole is mounted onto a top of the container body 20. The airless discharge pump may be installed in a conventional or usual manner as apparent to the skilled person in the art and therefore details thereof are omitted herein.

The piston 20 rises upward along and on an inner wall of the container body 10 as the content in the container body 10 becomes gradually exhausted. The rising operation of the piston 20 may depend on vacuum pressure within the container body 10. The rising operation of the piston 20 may be activated using a pinion gear installed between the piston 20 and the press button for operating the airless discharge pump. Korean Utility Model Application Publication No.2008-0002044 (publication date: June 23, 2008) discloses a cosmetic container using such a pinion gear for lifting up the piston.

The indicator 30 is installed beneath a bottom face of the container body 10, and includes an indicating pointer or needle 30a so as to inform the user of the content amount currently remaining in the container body 10. The indicating pointer 30a may rotate in association with the rising movement of the piston 20.

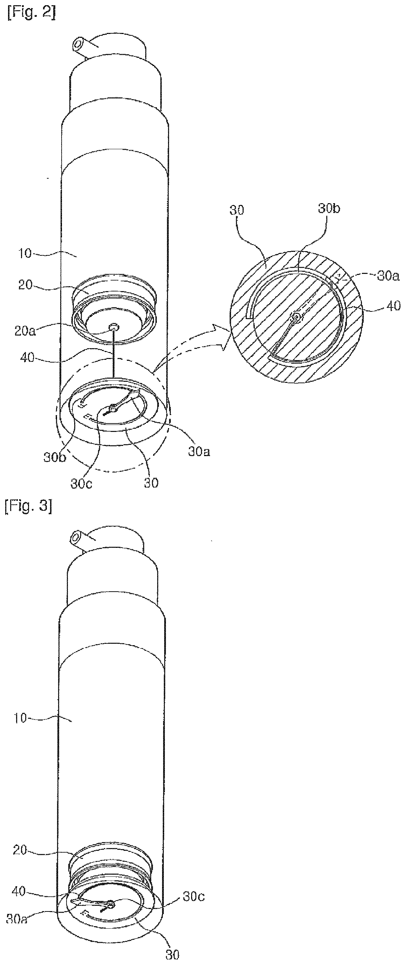

Fig.2 illustrates a connection relationship between the indicator 30 and a piston 20, and a structure of the indicator 30 as shown in Fig.1.

Referring to Fig.2, the indicator 30 may include the indicating pointer or needle 30a for informing the user of the remaining content amount, a winding groove 30b and a torsion spring 30c. Meanwhile, a thread fixing portion 20a is installed at the bottom face of the piston 20.

The indicating pointer 30a is suppressed with the torsion spring 30c in an elastic manner against movement. The indicating pointer 30a and the thread fixing portion 20a are connected with each other via a thread 40. The thread 40 coupled to the indicating pointer 30a is wound in and along the winding groove 30b and passes through a hole at the other end of the winding groove 30b and reaches the thread fixing portion 20a installed at the bottom face of the piston 20. As shown in Fig.2, the winding groove 30b may be formed in a plate of the indicator 30 in a duct manner so as to be hollow.

As the piston 20 moves up, the thread 40 is drawn upward and in turn the indicating pointer 30a coupled to the thread 40 is pulled around to rotate.

Fig.3 is a view of an initial state at which the container body 10 is completely filled with the content and thus the piston 20 is positioned as close to a bottom of the container body 10 as possible.

Referring to Fig.3, the piston 20 is in its lowest position and hence the thread 40 is not drawn upward by the piston 20. At this state, the indicating pointer 30a is suppressed with the torsion spring 30c in the elastic manner against the rotation movement and thus indicates the filling state of the container body 10.

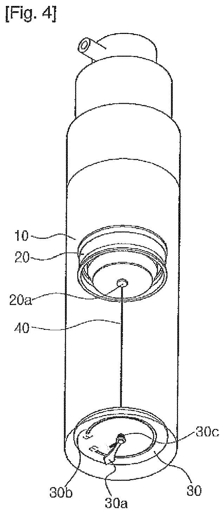

Fig.4 is a view of a content exhaustion state at which the content in the container body 10 becomes substantially exhausted and thus the piston 20 is positioned as close to a content inlet (not shown) of the airless discharge pump as possible.

Referring to Fig.4, the piston 20 is in its highest position and hence the thread 40 is drawn upward by the piston 20 with full force. At this state, the indicating pointer 30a is also drawn around with full force by the thread 40 connected thereto so as to rotate, thereby indicating the exhaustion state of the container body 10.

At an intermediate state between the filling and exhaustion states, the rotation amount of the indicating pointer 30a is proportional to the rising height of the piston 20, that is, used amount of the content. Consequently, it is easy for the user to easily check out the content amount remaining in the container body 10 by looking into the positions of the indicating pointer 30a.

While the foregoing has been with reference to a particular embodiment of the invention, it will be appreciated by those skilled in the art that changes in this embodiment may be made without departing from the scope of the appended claims.

## Claims

1. A cosmetic container, comprising:
a container body (10);
an airless discharge pump installed to the container body (10);
a piston (20) installed in the container body (10) so that a topmost level of content contained in the container body (10) reaches a content inlet of the airless discharge pump as the piston (20) moves upward along and on an inner wall of the container body (10) with operation of the airless discharge pump;
an indicator (30) indicating content amount remaining in the container body (10) in association with rising movement of the piston (20),
a thread fixing portion (20a) is installed at a bottom face of the piston (20); and
a thread (40) is connecting each other the thread fixing portion (20a) and the indicator (30),
wherein the indicator (30) operates when the thread (40) is drawn up with the rising movement of the piston (20), **characterized in that**
the indicator (30) comprises an indicating pointer (30a) drawn around by the thread (40) so as to rotate; a winding groove (30b) in and along which the thread (40), coupled to the indicating pointer (30a), is wound; and
a torsion spring (30c) suppressing the indicating pointer (30a) in an elastic manner from movement.

2. The container of claim 1, wherein
the indicator (30) is installed at a bottom face of the container body (10).

## Patentansprüche

1. Kosmetikbehälter, umfassend:
einen Behälterkörper (10);
eine luftfreie Abgabepumpe, die an dem Behälterkörper (10) angebaut ist;
einen Kolben (20), der in dem Behälterkörper (10) eingebaut ist, so dass ein oberstes Niveau von Inhalt, der in dem Behälterkörper (10) enthalten ist, einen Inhaltseinlass der luftfreien Abgabepumpe erreicht, wenn der Kolben (20) sich im Zuge einer Betätigung der luftfreien Abgabepumpe entlang und an einer Innenwand des Behälterkörpers (10) nach oben bewegt;
einen Anzeiger (30), der in Verbindung mit der Aufwärtsbewegung des Kolbens (20) eine Inhaltsmenge anzeigt, die in dem Behälterkörper (10) verbleibt,
wobei ein Fadenbefestigungsabschnitt (20a) an einer Bodenfläche des Kolbens (20) angebaut ist; und
ein Faden (40) den Fadenbefestigungsabschnitt (20a) und den Anzeiger (30) miteinander verbindet,
wobei der Anzeiger (30) arbeitet, wenn der Faden (40) im Zuge der Aufwärtsbewegung des Kolbens (20) nach oben gezogen wird, **dadurch gekennzeichnet, dass**
der Anzeiger (30) umfasst: einen Anzeigezeiger (30a), der durch den Faden (40) so herumgezogen wird, dass er sich dreht;
eine Wickelnut (30b), in und entlang welcher der Faden (40), der mit dem Anzeigezeiger (30a) gekoppelt ist, gewickelt wird; und
eine Drehstabfeder (30c), die eine Bewegung des Anzeigezeigers (30a) auf elastische Weise unterdrückt.

2. Behälter nach Anspruch 1, wobei
der Anzeiger (30) an einer Bodenfläche des Behälterkörpers (10) angebaut ist.

## Revendications

1. Récipient pour cosmétique, comprenant :
un corps de récipient (10) ;
une pompe de décharge airless installée sur le corps de récipient (10) ;
un piston (20) installé dans le corps de récipient (10) de telle manière qu'un niveau le plus haut de contenu contenu dans le corps de récipient (10) atteint un orifice d'entrée de contenu de la pompe de décharge airless quand le piston (20) se déplace vers le haut le long de et sur une paroi intérieure du corps de récipient (10) avec l'actionnement de la pompe de décharge airless ;
un indicateur (30) indiquant une quantité de contenu restant dans le corps de récipient (10) en association avec un mouvement de montée du piston (20),
une partie de fixation de fil (20a) est installée au niveau d'une face de fond du piston (20) ; et
un fil (40) relie ensemble la partie de fixation de fil (20a) et l'indicateur (30),
dans lequel l'indicateur (30) fonctionne quand le fil (40) est tiré avec le mouvement de montée du piston (20), **caractérisé en ce que**
l'indicateur (30) comprend un pointeur indicateur (30a) tiré par le fil (40) de façon à tourner ; une rainure d'enroulement (30b) dans et le long de laquelle le fil (40), couplé au pointeur indicateur (30a), est enroulé ; et
un ressort de torsion (30c) empêchant le pointeur indicateur (30a) de se déplacer d'une manière élastique.

2. Récipient selon la revendication 1, dans lequel
l'indicateur (30) est installé au niveau d'une face inférieure du corps de récipient (10).
